# EUROPÄISCHE PATENTSCHRIFT

(11) **EP 4 033 137 B1**
(45) Veröffentlichungstag und Bekanntmachung des Hinweises auf die Patenterteilung: **09.08.2023**
(21) Anmeldenummer: 22152002.6
(22) Anmeldetag: 18.01.2022
(51) Int. Cl.: F16L 33/207

(54) **VORRICHTUNG ZUM ANSCHLIESSEN EINES KUNSTSTOFFROHRES**
DEVICE FOR CONNECTING A PLASTIC TUBE
DISPOSITIF DE RACCORDEMENT D'UN TUBE EN MATIÈRE PLASTIQUE

(30) Priorität: 20.01.2021 AT 500252021
(43) Veröffentlichungstag der Anmeldung: 27.07.2022
(73) Patentinhaber: KE KELIT GmbH, 4020 Linz (AT)
(72) Erfinder: Ratschmann, Elmar, 4202 Hellmonsödt (AT)
(74) Vertreter: Hübscher & Partner Patentanwälte GmbH

(56) Entgegenhaltungen:
- WO-A1-2018/002227
- CN-U- 211 203 242

## Beschreibung

Die Erfindung bezieht sich auf eine Vorrichtung zum Anschließen eines Kunststoffrohres mit einer Presshülse und einem unter Ausbildung eines ringspaltförmigen Aufnahmeraums für ein Kunststoffrohr in die Presshülse eingesetzten Anschlussnippel, wobei die Presshülse und der Anschlussnippel über eine Aufnahmehülse verbunden sind, die einen zu einer Anblaskante führenden Strömungskanal für einen aus dem ringspaltförmigen Aufnahmeraum austretenden Gasstrom bildet.

Eine Vorrichtung zum Anschließen eines Kunststoffrohres an ein weiteres Kunststoffrohr ist aus der WO2018002227A1 bekannt. Hierzu weist die Vorrichtung eine Presshülse und einen in der Presshülse angeordneten Anschlussnippel auf, wodurch sich ein ringspaltförmiger Aufnahmeraum zwischen Presshülse und Anschlussnippel ausbildet. In diesen ringspaltförmigen Aufnahmeraum kann ein Kunststoffrohrendabschnitt eines Kunststoffverbundrohres eingesetzt und durch Aufbringen einer in Radialrichtung nach innen wirkenden Presskraft auf die Presshülse der Kunststoffrohrendabschnitt mit dem Anschlussnippel verpresst werden. Bei unzureichender bzw. nicht erfolgter Verpressung ergibt sich allerdings zwischen dem Kunststoffrohrendabschnitt und dem Anschlussnippel ein Leckagenkanal, durch den im Kunststoffrohr strömendes Gas bei einer Dichtheitsprobe austreten kann. Um solche unerwünschten Leckagen bei der Dichtheitsprobe identifizieren bzw. lokalisieren zu können, ist eine Aufnahmehülse vorgesehen, über die der Anschlussnippel mit der Presshülse verbunden ist. Die Aufnahmehülse weist einen Strömungskanal für einen aus dem - im ringspaltförmigen Aufnahmeraum verlaufenden - Leckagenkanal austretenden Gasstrom auf, wobei der Strömungskanal über eine Anblaskante zu einer Austrittsöffnung führt, sodass bei Gasaustritt ein Pfeifton entsteht, der eine Lokalisierung der Leckage erlaubt. Nachteilig daran ist allerdings, dass vor allem in der Kühl- bzw. Heiztechnik üblicherweise Rohrisolierungen eingesetzt werden, um den Energieverlust zu minimieren. Solche Rohrisolierungen können jedoch den Pfeifton abdämpfen oder gänzlich verhindern, sodass eine Identifikation etwaiger Leckagen erschwert wird.

Der Erfindung liegt somit die Aufgabe zugrunde, eine Vorrichtung der eingangs geschilderten Art vorzuschlagen, die eine sichere Identifikation und Lokalisierung von Leckagen von isolierten Rohrsystemen ermöglicht, ohne dabei einen aufwendigen Isoliervorgang zu bedingen.

Die Erfindung löst die gestellte Aufgabe dadurch, dass der Strömungskanal in eine in Radialrichtung offene Austrittsöffnung mündet, der ein Abstandhalter zum Aufspannen eines ausgehend von der Austrittsöffnung sich in Radialrichtung erstreckenden, der Austrittsöffnung in Strömungsrichtung nachgeordneten, Schallraums zugeordnet ist. Zufolge dieser Maßnahmen wird verhindert, dass etwaige Isolierungen oder andere die Vorrichtung umhüllende Materialien die Austrittsöffnung abdecken oder in diese eindringen und somit den erzeugten Pfeifton abdämpfen bzw. das Entstehen des Pfeiftons verhindern. Der Abstandhalter kann beispielsweise ein einfacher Dorn sein, der im Bereich der Austrittsöffnung angeordnet ist und sich in Radialrichtung nach außen erstreckt und somit ein vollständiges Abdecken der Austrittsöffnung durch beispielsweise eine Isolierung der Vorrichtung verhindert. Dadurch wird ein Schallraum aufgespannt und aufrechterhalten, durch den sich der Pfeifton ausbreiten kann. Die erfindungsgemäße Vorrichtung kann wie folgt zum Anschließen eines Kunststoffrohres eingesetzt werden. Ein Kunststoffrohrendabschnitt eines Kunststoffverbundrohres wird in den ringspaltförmigen Aufnahmeraum zwischen der Presshülse und dem innerhalb der Presshülse angeordneten Anschlussnippel angeordnet. Durch Aufbringen einer Presskraft umfangseitig auf die Presshülse in Radialrichtung nach innen wird das Kunststoffrohr mit dem Anschlussnippel fluiddicht verpresst. Bei nicht ordnungsgemäßem bzw. nicht durchgeführtem Verpressen verbleibt ein Leckagenkanal zwischen Kunststoffverbundrohr und Anschlussnippel. Um einen aus dem Leckagenkanal austretenden Gasstrom bei beispielsweiser einer Dichtheitsprobe identifizieren und lokalisieren zu können, weist die Vorrichtung eine Aufnahmehülse auf, die die Presshülse und den Anschlussnippel kunststoffrohrendabschnittseitig miteinander verbindet und einen Strömungskanal für den aus dem ringspaltförmigen Aufnahmeraum austretenden Gasstrom aufweist. Die Aufnahmehülse kann die Presshülse wenigstens abschnittsweise presshülsenmantelseitig umgreifen. Die Aufnahmehülse weist insbesondere einen Strömungskanal für den aus dem zwischen einem aufnehmbaren Kunststoffrohr und dem Anschlussnippel verlaufenden Leckagenkanal, der innerhalb des ringspaltförmigen Aufnahmeraums verläuft, auf. Der Strömungskanal der Aufnahmehülse leitet den Gasstrom über die Anblaskante zu der Austrittsöffnung, wodurch ein Pfeifton entsteht, der über die Austrittsöffnung an die Umgebung abgegeben werden kann. Durch den erfindungsgemäßen Abstandhalter wird ein Mindestschallraum aufgespannt, der notwendig ist, um einen für die Lokalisierung der Leckage ausreichend lauten Pfeifton zu gewähren. Die Aufnahmehülse kann auf der dem Kunststoffrohr gegenüberliegenden Seite einen Anschluss für ein weiteres Kunststoffrohr oder für andere Anschlussvorrichtungen aufweisen. Die Aufnahmehülse kann mit der Presshülse und/oder dem Anschlussnippel einstückig ausgebildet sein.

Eine besonders günstige Schallausbreitung, sowie vorteilhafte konstruktive Bedingungen ergeben sich, wenn der Abstandhalter ein über der Austrittsöffnung verlaufender und von dieser in Radialrichtung beabstandeter Steg ist. Der Steg kann in Längsachse der Aufnahmehülse verlaufen. Insbesondere kann der Steg eine Überdachung für die Austrittsöffnung ausbilden, sodass auch ein nur abschnittsweises Abdecken der Austrittsöffnung durch etwaige Isolierungen verhindert werden kann. Der Steg kann von Dornen unterstützt sein, um eine Verformung des Stegs, die eventuell zu einem abschnittsweisen Abdecken der Austrittsöffnung führen könnte, zu verhindern.

Um Standardisolierungen verwenden zu können und die Konstruktion des Abstandhalters möglichst einfach ausgestalten zu können, empfiehlt es sich, dass die Austrittsöffnung in einem zylindrischen Abschnitt der Aufnahmehülse angeordnet ist. Auf diese Weise kann der Steg parallel zur Längsachse der Aufnahmehülse verlaufen, wodurch ein ausreichend großer Schallraum zwischen Steg und Aufnahmeraum aufgespannt wird.

Eine besonders kompakte Vorrichtung ergibt sich, wenn die Austrittsöffnung die Anblaskante ausbildet. Die Anblaskante kann ausgehend von der Austrittsöffnung in den Strömungskanal ragen. Aufgrund des erfindungsgemäßen Abstandhalters kann die Anblaskante aber auch in der gleichen Ebene wie der Mantel der Aufnahmehülse verlaufen, bzw. vom Mantel der Aufnahmehülse ausgebildet werden und muss somit nicht in den Strömungskanal ragen, da ein ausreichend großer Schallraum zur Erzeugung des Pfeiftons ohnehin vom Abstandhalter aufgespannt wird. Auf diese Weise kann der Strömungskanal selbst geometrisch einfach und schmal ausgebildet sein.

In der Zeichnung ist der Erfindungsgegenstand beispielsweise dargestellt. Es zeigen
- Fig. 1: einen schematischen Schnitt durch zwei über eine erfindungsgemäße Vorrichtung verbundene Kunststoffrohre,
- Fig. 2: einen Schnitt entlang der Linie II-II der Fig. 1 in größerem Maßstab,
- Fig. 3: eine erste Ausführungsform der Aufnahmehülse der erfindungsgemäßen Vorrichtung in perspektivischer Darstellung und
- Fig. 4: eine zweite Ausführungsform der Aufnahmehülse der erfindungsgemäßen Vorrichtung in perspektivischer Darstellung.

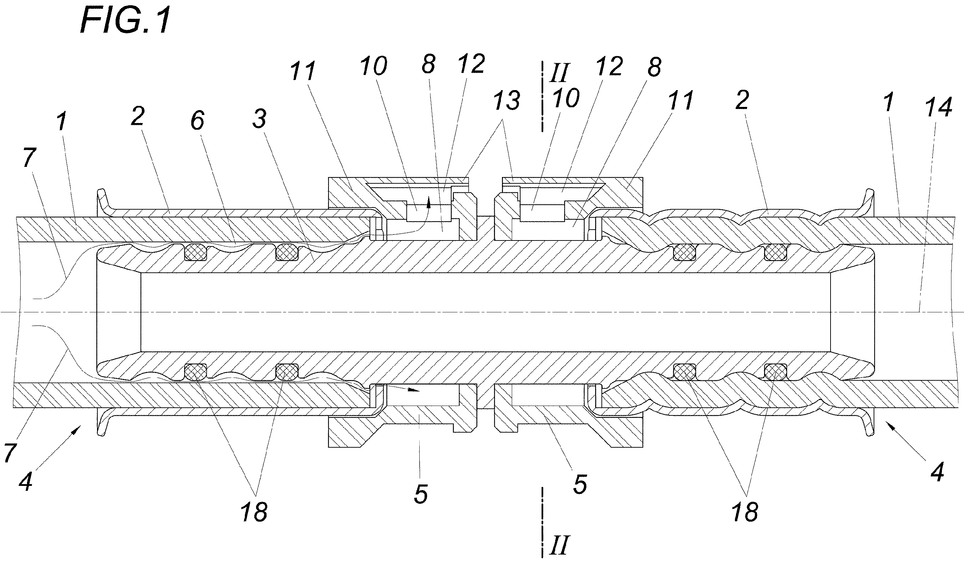

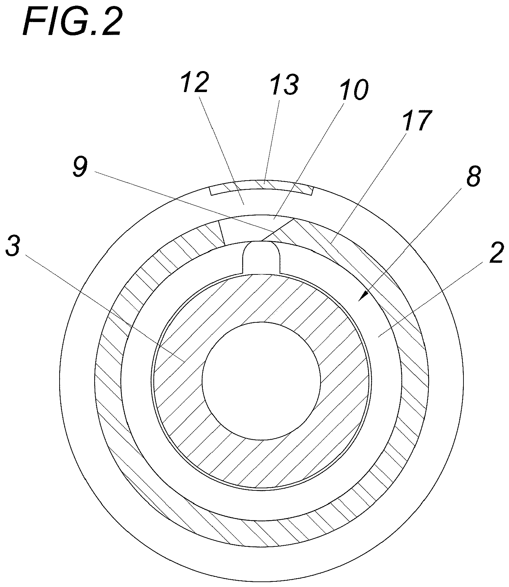

Eine Vorrichtung zum Anschließen eines Kunststoffrohres 1 weist, wie in Fig. 1 veranschaulicht, eine Presshülse 2 und einen in der Presshülse 2 verlaufenden hohlen Anschlussnippel 3 auf. Der Anschlussnippel 3 weist einen kleineren Durchmesser als die Presshülse 2 auf, wodurch sich zwischen der Presshülse 2 und dem in der Presshülse 2 verlaufenden Anschlussnippel 3 ein ringspaltförmiger Aufnahmeraum 4 ergibt, in den das Kunststoffrohr 1 einsetzbar ist. Die Presshülse 2 und der Anschlussnippel 3 sind über eine Aufnahmehülse 5 miteinander verbunden. Es ist auch denkbar, dass die Presshülse 2 und/oder der Anschlussnippel 3 und/oder die Aufnahmehülse 5 miteinander einstückig ausgebildet sind. Zum Anschließen eines Kunststoffrohres 1 wird dieses in den ringspaltförmigen Aufnahmeraum 4 zwischen Presshülse 2 und Anschlussnippel 3 eingeführt und durch umfangseitiges Aufbringen einer Presskraft auf die Presshülse 2 in Radialrichtung nach innen das Kunststoffrohr 1 mit dem Anschlussnippel 3 verpresst. Bei nicht durchgeführter oder nicht ordnungsgemäßer Verpressung ergibt sich bzw. verbleibt ein Leckagenkanal 6 zwischen dem Kunststoffrohr 1 und dem Anschlussnippel 3. Ein im Rahmen einer Dichtheitsprobe durch das Kunststoffrohr 1 geleiteter Gasstrom 7 kann somit durch den Leckagenkanal 6 ausströmen. Eine nicht durchgeführte Verpressung ist beispielhaft am linken Kunststoffrohr 1 der Fig. 1 dargestellt. Der ausströmende Gasstrom 7 wird von der Aufnahmehülse 5 aufgenommen. Hierzu weist die Aufnahmehülse 5 einen Strömungskanal 8 für den aus dem ringspaltförmigen Aufnahmeraum 4 austretenden, insbesondere für den aus dem Leckagenkanal 6 zwischen einsetzbarem Kunststoffrohr 1 und Anschlussnippel 3 austretenden Gasstrom 7 auf. Der Leckagenkanal 6 ist jener Bereich des ringspaltförmigen Aufnahmeraums 4, der zwischen nicht verpresstem oder nicht ordnungsgemäß verpresstem Kunststoffrohr 1 und Anschlussnippel 3 verläuft, wie dies beim linken Kunststoffrohr 1 der Fig. 1 gezeigt ist. Fig. 2 zeigt, dass der Strömungskanal 8 umfangseitig um den Anschlussnippel 3 verläuft, sodass etwaige Leckagen entlang des gesamten Umfangs zwischen Anschlussnippel 3 und Kunststoffrohr 1 erfasst werden können. Der Strömungskanal 8 führt den Gasstrom 7 über eine Anblaskante 9 zu einer Austrittsöffnung 10, wodurch ein Pfeifton entsteht, der eine Identifikation bzw. Lokalisierung der Leckage ermöglicht. Um auch eine Identifikation bzw. Lokalisierung von isolierten Kunststoffrohren 1 zu ermöglichen, mündet der Strömungskanal 8 in eine in Radialrichtung nach außen offene Austrittsöffnung 10, wobei der Austrittsöffnung 10 ein Abstandhalter 11 zugeordnet ist (Fig. 1). Der Abstandhalter 11 spannt dabei einen Schallraum 12 auf, der sich ausgehend von der Austrittsöffnung 10 in Radialrichtung erstreckt. Der durch den Abstandhalter 11 geschaffene Schallraum 12 erzeugt dabei einen Mindestabstand zwischen der Austrittsöffnung 10 und etwaigen Isolierungen, wodurch ein Abdecken der Austrittsöffnung 10, das zu einem Dämpfen bzw. Verhindern des Pfeiftons führen würde, vermieden werden kann.

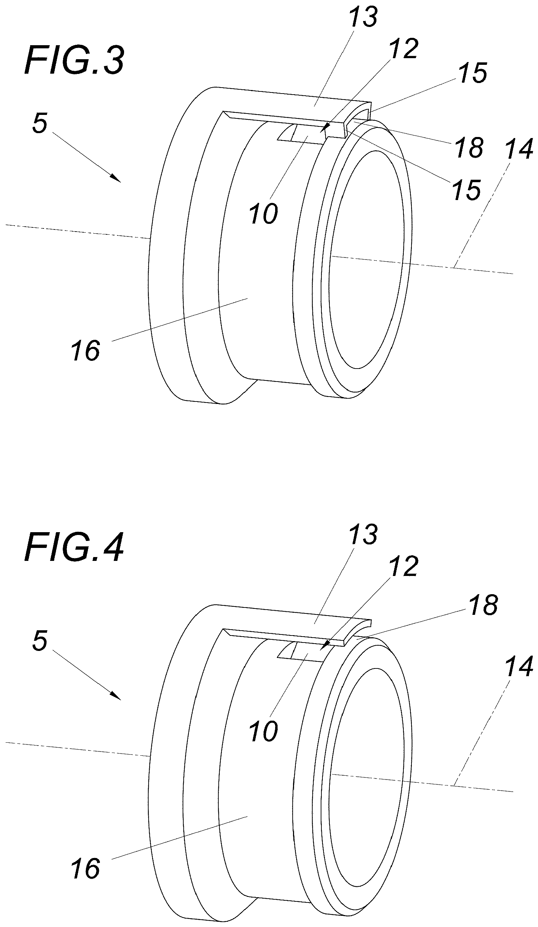

Insbesondere aus den Figs. 3 und 4 geht hervor, dass der Abstandhalter 11 ein über der Austrittsöffnung 10 verlaufender Steg 13 sein kann, der von der Austrittsöffnung 10 in Radialrichtung nach außen beabstandet ist. Der Steg 13 kann in Richtung der Längsachse 14 der Aufnahmehülse 5 verlaufen. Fig. 3 zeigt, dass der Steg 13 von Dornen 15 unterstützt sein kann, um eine Verformung des Stegs 13 und somit ein abschnittsweises Abdecken der Austrittsöffnung 10 zu verhindern.

Der Steg 12 kann eine Überdachung für die Austrittsöffnung 10 ausbilden. Dies bedeutet, dass die in Radialrichtung projizierte Fläche des Stegs 13 wenigstens gleich groß wie die in Radialrichtung projizierte Fläche der Austrittsöffnung 10 ist. Werden nun die Vorrichtung und das Kunststoffrohr 1 mit einer Isolierung versehen, so bleibt wenigstens der der Austrittsöffnung 10 in Strömungsrichtung nachgeordnete Schallraum 12, der zwischen Austrittsöffnung 10 und Steg 13 aufgespannt wird, bestehen, wodurch sich ein Mindestvolumen für den Schallraum 12 ergibt, in dem sich der Pfeifton ausbreiten kann.

In einer alternativen, nicht dargestellten Ausführungsform kann der Abstandhalter 11 ein Dorn sein, der sich in Radialrichtung nach außen erstreckt. In diesem Fall kann der Schallraum 12 abschnittsweise von der am Dorn anliegenden Isolierung aufgespannt werden.

Wie den Figs. 3 und 4 zu entnehmen ist, kann die Austrittsöffnung 10 in einem zylindrischen Abschnitt 16 der Aufnahmehülse 5 angeordnet sein. Dadurch kann auch der Steg 13 parallel zur Längsachse 14 der Aufnahmehülse 5 verlaufen, um einen symmetrischen Schallraum 12 aufzuspannen, wodurch sich ein besonders deutliches akustisches Signal im Falle einer Leckage ergibt.

Wie in Fig. 2 dargestellt ist, kann die Austrittsöffnung 10 die Anblaskante 9 ausbilden. Da ein ausreichend großer Schallraum 12 zur Ausbreitung des Pfeiftons ohnehin vom Abstandhalter 11 aufgespannt wird, kann die Anblaskante 9 in der gleichen Ebene wie der Mantel 17 der Aufnahmehülse 5 verlaufen, bzw. vom Mantel 17 der Aufnahmehülse 5 ausgebildet werden und muss somit nicht in den Strömungskanal 8 ragen, wodurch sich eine besonders einfache Fertigung der Vorrichtung ergibt.

Der durch den Abstandhalter 11 aufgespannte Schallraum 12 kann quer zu Austrittsöffnung 10 verlaufende Auslässe 18 aufweisen (Fig. 3), wodurch eine Schallausbreitung des Pfeiftons auch bei engem Anliegen einer Isolierung am Abstandhalter 11 begünstigt wird.

Die in Fig. 1 gezeigte Ausführungsform der erfindungsgemäßen Vorrichtung kann zum Verbinden zweier Kunststoffrohre 1 eingesetzt werden. Hierzu können zwei erfindungsgemäße Vorrichtungen eingesetzt werden, welche sich einen gemeinsamen Anschlussnippel 3 teilen.

Der Anschlussnippel 3 kann grundsätzlich Dichtringe 18 aufweisen, welche in umfangseitig verlaufende Vertiefungen des Anschlussnippels 3 angeordnet sind.

## Patentansprüche

1. Vorrichtung zum Anschließen eines Kunststoffrohres (1) mit einer Presshülse (2) und einem unter Ausbildung eines ringspaltförmigen Aufnahmeraums (4) für ein Kunststoffrohr (1) in die Presshülse (2) eingesetzten Anschlussnippel (3), wobei die Presshülse (2) und der Anschlussnippel (3) über eine Aufnahmehülse (5) verbunden sind, die einen zu einer Anblaskante (9) führenden Strömungskanal (8) für einen aus dem ringspaltförmigen Aufnahmeraum (4) austretenden Gasstrom (7) bildet, wobei der Strömungskanal (8) in eine in Radialrichtung offene Austrittsöffnung (10) mündet, **dadurch gekennzeichnet, dass** der Austrittsöffnung ein Abstandhalter (11) zum Aufspannen eines ausgehend von der Austrittsöffnung (10) sich in Radialrichtung erstreckenden, der Austrittsöffnung (10) in Strömungsrichtung nachgeordneten, Schallraums (12) zugeordnet ist.

2. Vorrichtung nach Anspruch 1, **dadurch gekennzeichnet, dass** der Abstandhalter (11) ein über der Austrittsöffnung (10) verlaufender und von dieser in Radialrichtung beabstandeter Steg (13) ist.

3. Vorrichtung nach Anspruch 2, **dadurch gekennzeichnet, dass** der Steg (13) eine Überdachung für die Austrittsöffnung (10) ausbildet.

4. Vorrichtung nach einem der Ansprüche 1 bis 3, **dadurch gekennzeichnet, dass** die Austrittsöffnung (10) in einem zylindrischen Abschnitt (16) der Aufnahmehülse (5) angeordnet ist.

5. Vorrichtung nach einem der Ansprüche 1 bis 4, **dadurch gekennzeichnet, dass** die Austrittsöffnung (10) die Anblaskante (9) ausbildet.

## Claims

1. Device for connecting a synthetic material tube (1) having a pressing sleeve (2) and a connecting nipple (3) which is inserted into the pressing sleeve (2), thus forming an annular gap-shaped receiving space (4) for a synthetic material tube (1), wherein the pressing sleeve (2) and the connecting nipple (3) are connected via a receiving sleeve (5) which forms a flow channel (8), leading to a blow edge (9), for a gas stream (7) exiting from the annular gap-shaped receiving space (4), wherein the flow channel (8) issues into an outlet opening (10) which is open in the radial direction, **characterised in that** the outlet opening is allocated a spacer (11) for spanning a sound chamber (12) which, starting from the outlet opening (10), extends in the radial direction and is arranged downstream of the outlet opening (10) in the flow direction.

2. Device as claimed in claim 1, **characterised in that** the spacer (11) is a web (13) which extends above the outlet opening (10) and is spaced apart therefrom in the radial direction.

3. Device as claimed in claim 2, **characterised in that** the web (13) forms a roof for the outlet opening (10).

4. Device as claimed in any one of claims 1 to 3, **characterised in that** the outlet opening (10) is arranged in a cylindrical portion (16) of the receiving sleeve (5).

5. Device as claimed in any one of claims 1 to 4, **characterised in that** the outlet opening (10) forms the blow edge (9).

## Revendications

1. Dispositif pour le raccordement d'un tuyau en matière plastique (1) avec une douille de sertissage (2) et un mamelon de raccordement (3) inséré dans la douille de sertissage (2) en formant un espace de réception (4) en forme de fente annulaire pour un tuyau en matière plastique (1), la douille de sertissage (2) et le mamelon de raccordement (3) étant reliés par une douille de logement (5) qui forme un canal d'écoulement (8) menant à un bord de soufflage (9) pour un flux de gaz (7) sortant de l'espace de réception (4) en forme de fente annulaire, lequel canal d'écoulement (8) débouche dans un orifice de sortie (10) ouvert dans la direction radiale, **caractérisé en ce qu'**à l'orifice de sortie est associé un écarteur (11) pour créer une chambre de résonance (12) située derrière l'orifice de sortie (10) dans le sens de l'écoulement, s'étendant dans la direction radiale à partir de l'orifice de sortie (10).

2. Dispositif selon la revendication 1, **caractérisé en ce que** l'écarteur (11) est une barrette (13) courant au-dessus de l'orifice de sortie (10) et écartée de celui-ci dans la direction radiale.

3. Dispositif selon la revendication 2, **caractérisé en ce que** la barrette (13) forme une couverture pour l'orifice de sortie (10).

4. Dispositif selon une des revendications 1 à 3, **caractérisé en ce que** l'orifice de sortie (10) est situé dans une section cylindrique (16) de la douille de logement (5).

5. Dispositif selon une des revendications 1 à 4, **caractérisé en ce que** l'orifice de sortie (10) forme un bord de soufflage (9).
